# EUROPEAN PATENT APPLICATION

(11) **EP 4 613 483 A1**
(43) Date of publication of application: **10.09.2025**
(21) Application number: 25162600.8
(22) Date of filing: 10.03.2025
(51) Int. Cl.: B33Y 10/00, B33Y 80/00, F16C 7/02, F16L 47/00, B29C 64/118, B29L 31/06

(54) **3D PRINTED FITTINGS AND METHODS OF FORMING THE SAME**

(30) Priority: 08.03.2024 US 202463562962 P; 17.02.2025 US 202519055308
(71) Applicant: Avtechtyee, Inc., Everett, WA 98203 (US)
(72) Inventor: RAFINER, Nicolas Karl, Mill Creek, WA 98012 (US)
(74) Representative: Calysta NV

(57) **Abstract**

A 3D printed fitting includes an axially extending body having a first end opposite a second end. The body extends along a first axis, and the body is 3D printed by laying horizontal successive horizontal layers of material with the first axis at a print angle between 0 degrees and 65 degrees from a vertical axis.

## Description

### CROSS REFERENCE TO RELATED APPLICATION

This application is based upon and claims priority to U.S. Provisional Application No. 63/562,962, filed on March 8, 2024, the contents of which are fully incorporated herein by reference.

### BACKGROUND

Composite materials offer high stiffness and/or strength-to-weight ratios. Control rods and linkages are formed from composite materials and are used for transferring loads in structures such as aircraft or spacecraft. Typical control rods or linkages may be tubular or solid in nature.

In vehicles such as aircraft, it is beneficial to use control rods or linkages in the form of composite tube assemblies rather than metal tube assemblies. They are lighter and stronger than comparable metal tube assemblies. The composite tube assemblies incorporate composite tubes which typically are carbon fiber tubes and are lighter in weight, more resistant to corrosion, stronger and more inert relative to substantially metallic tube assemblies. Composite tube assemblies may be used in multiple applications, as for example as control rods or in an overhead luggage bin (or stow bin) assemblies in an aircraft to provide structural support both when the bin is in an open configuration and when it is closed. Composite tube assemblies may also be used as structural inserts in vehicle frames.

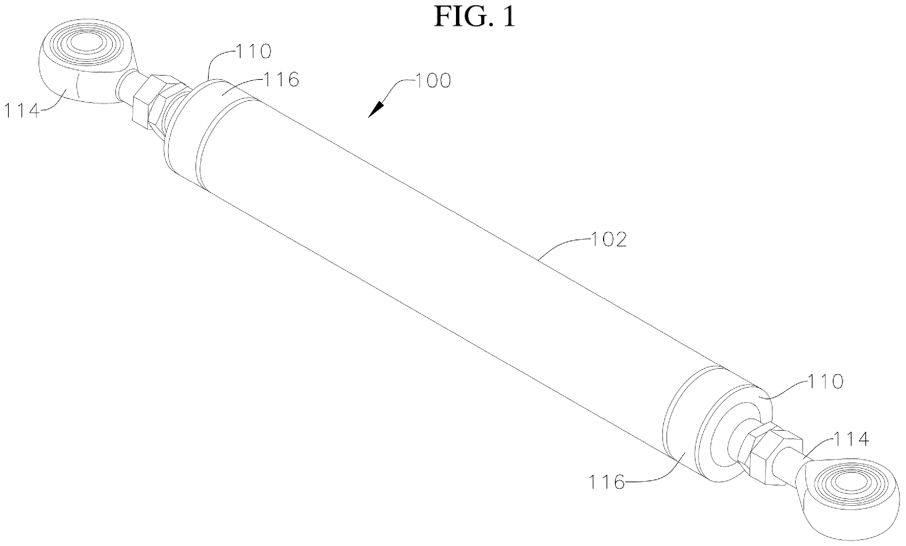

Composite tube assemblies 100 incorporate a fitting or insert 110 (individually and collectively referred to herein for convenience as "fitting") at each end of a composite tube 102, as for example shown in FIG. 1. A clevis bolt, end rod, or other type of connecting insert 114 is connected, e.g., threaded, to the fitting 110. Each composite tube end portion 116 is mated over an outer surface of its corresponding fitting. A typical fitting is described on U.S. Patent No. 8,205,315, the contents of which are fully incorporated herein by reference. To connect the fittings to the composite tube, the fittings are inserted into the opposite ends of the composite tube, and the corresponding end portions 116 of the composite tube are compressed over their corresponding fittings 110 to form the composite tube assembly, as for example shown in FIG. 1. Typically, the composite tube is heated to its gel transition temperature (i.e., the gel transition temperature of the carbon fiber composite material itself). Once the gel transition temperature is reached, the fitting 110 is inserted into the composite tube end and its corresponding end portion is pressed over the fitting. Typical fittings are often machined from titanium and thus, tend to be heavy. Lighter weight fittings are desired.

### SUMMARY

In an example embodiment, a 3D printed fitting includes an axially extending body having a first end opposite a second end. The body extends along a first axis, and the body is 3D printed by laying successive horizontal layers of material with the first axis at an angle between 10 degrees and 65 degrees from a vertical axis (i.e., a print angle). In another example embodiment, the print angle is at or between 30 and 50 degrees. In yet another example embodiment, the print angle is 45 degrees. In a further example embodiment, the fitting further includes a radially extending flange defined on the body between the first end and the second end. In yet a further example embodiment, the body includes an outer surface that tapers in an axial direction away from the flange toward the second end from a smaller outer surface diameter to a larger outer surface diameter. In one example embodiment, the fitting also includes a polygonal head extending from the first end toward the second end. In another example embodiment, the polygonal head has a tapered end surface tapering at angle relative to the first axis, the angle being complementary to the print angle. In yet another example embodiment, the 3D printed fitting also includes an internally threaded insert embedded in the body for threading a connecting insert thereto. In a further example embodiment, the material is at least one of an onyx, plastic, or nylon reinforced with a continuous fiber. In yet a further example embodiment, the continuous fiber is fiber selected from the group of fibers consisting essentially of carbon fiber, Kevlar, and fiberglass fibers.

In an example embodiment, a method of forming an axially extending fitting extending along a first axis from a first end of the fitting to a second end of the fitting includes 3D printing a body of the fitting by laying successive horizontal layers of material to form the fitting extending along a print angle defined between the vertical axis and the first axis. In another example embodiment, the method includes 3D printing the body of the fitting to extend at a print angle at or between 30 and 50 degrees. In yet another example embodiment, the method includes 3D printing the body of the fitting to extend a print angle of 45 degrees. In a further example embodiment, 3D printing includes printing the body of the fitting to have a polygonal end extending from the first end, and the polygonal end is 3D printed to have an end chamfered surface chamfered at an angle relative to the first axis that is complementary to the print angle. In yet a further example embodiment the method includes 3D printing the body of the fitting to have a radially extending flange. In one example embodiment, the method includes 3D printing the body of the fitting to have a section including a tapering outer surface tapering from a smaller to a larger diameter in a direction toward the second end. In another example embodiment, the method also includes inserting an internally threaded insert into the body of the fitting from the first end or the second end. In yet another example embodiment, 3D printing includes, 3D printing a portion of the body of the fitting inserting an internally threaded insert in the body, and 3D printing a remaining portion of the body of the fitting encapsulating the insert within the body of the fitting . In a further example embodiment, the material is at least one of an onyx, plastic, or nylon reinforced with a continuous fiber. In yet a further example embodiment, the continuous fiber is a fiber selected from the group of fibers consisting essentially of carbon fiber, Kevlar, and fiberglass fibers.

In an example embodiment, a 3D printed fitting includes an axially extending body having a first end opposite a second end, wherein the body extends along a first axis, wherein the body is 3D printed with the first axis extending perpendicularly from a horizontal print bed. In another example embodiment, the fitting also includes a radially extending flange defined on the body between the first end and the second end having a first surface opposite a second surface, such that the first surface is closer to the print bed when being printed and wherein the first surface extends at an angle relative to first axis defining a tapering outer surface. In yet another example embodiment, the fitting is formed by 3D printing without supports. In a further example embodiment, the body includes an outer surface that tapers in an axial direction away from the flange toward the second end from a smaller outer surface diameter to a larger outer surface diameter. In yet a further example embodiment, the fitting also includes a polygonal head extending from the first end toward the second end. In one example embodiment, the polygonal head has a tapered end surface tapering at angle relative to the first axis. In another example embodiment, the fitting further includes an internally threaded insert embedded in the body for threading a connecting insert thereto. In yet another example embodiment, the body is formed by 3D printing with at least one of an onyx, plastic, or nylon reinforced with a continuous fiber. In a further example embodiment, the continuous fiber is fiber selected from the group of fibers consisting essentially of carbon fiber, Kevlar, and fiberglass fibers.

### BRIEF DESCRIPTION OF THE DRAWINGS

FIG. 1 is a perspective view of a composite tube assembly.
FIG. 2 is a plan view of an example embodiment 3D printed fitting.
FIG. 3 is a plan view of a 3D printed fitting 3D printed at a print angle of 0 degrees.
FIG. 4 is plan view of an example embodiment 3D printed fitting printed along a 45 degree print angle.
FIG. 5 is a cross-sectional view of the example embodiment 3D printed fitting shown in FIG. 2

### DESCRIPTION

An example embodiment fitting 10 has an axially extending body 2 extending from a first end 4 to a second end 6, as for example shown in FIG. 1. Thus, a central longitudinal axis 14 of the fitting extends from the first end to the second end. A flange 24 extends radially on the body at a location between the first and second ends. A first section of the body in the form of a polygonal head 18 extends from the first end toward the flange. In the shown example embodiment, the polygonal head is a hex head. A second section 26 of the body is defined between the flange and the second end. In an example embodiment, the second section has an outer surface 27 that tapers from a smaller diameter to a larger diameter in a direction toward the second end. In use the second section of the fitting is received within an end of a composite tube such that the end of the composite tube abuts the flange and an inner surface of the composite tube, when pressed, engages the outer surface 27 of the second section of the fitting. In an example embodiment the outer surface 27 may not be smooth. It may have projections and/or depressions. In one example embodiment, the outer surface 27 includes a plurality of spaced apart annular grooves extending about the central longitudinal axis. In another example embodiment, the outer surface has a helical groove extending around it and from, or proximate, the second end toward the flange.

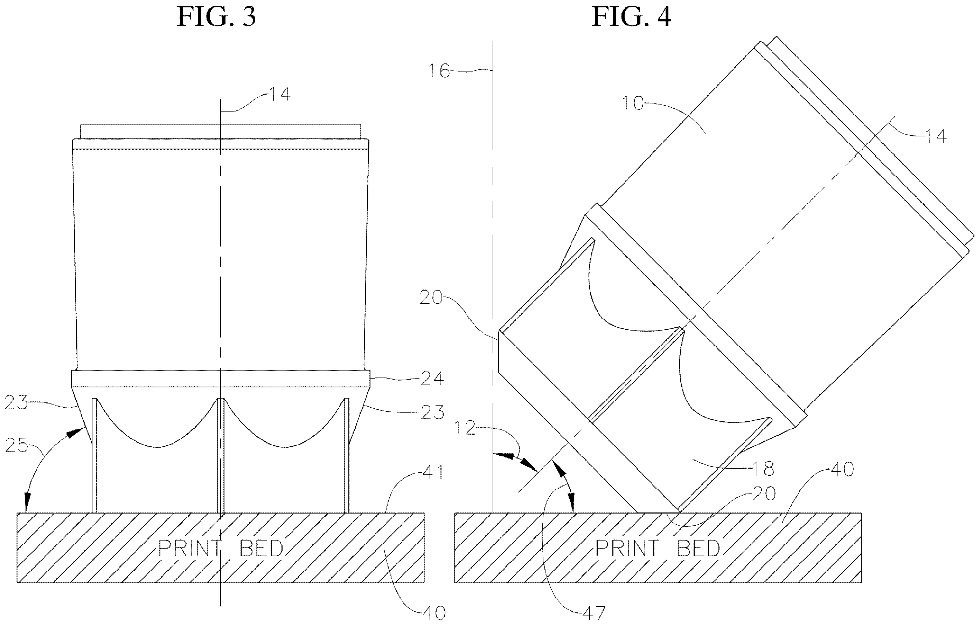

An example embodiment fitting is printed using a three-dimensional (3D) printer using onyx plastic or nylon and a continuous fiber. Example onyx plastics on nylons are Onyx FR and Onyx FR-A provided by Markforged. Example continuous fibers are Carbon Fiber FR and Carbon Fiber FR-A also provided by Markforged. 3D printing of objects is well known in the art. 3D printing is an additive manufacturing process that creates a physical object from a digital design. The process works by laying down thin layers of material in the form of liquid or powdered plastic, metal, fiber or cement, over a print bed and then fusing the layers together. Each layer is laid along a horizontal plane, i.e., a plane perpendicular to the vertical. When the fitting is formed by printing at 0 degrees, i.e., by printing the fitting with its central longitudinal axis 14 vertically oriented, i.e., with its central longitudinal axis perpendicular to a printing surface 41 of a print bed 40, as for example shown in FIG. 3, it is printed with the polygonal head 18 on the print bed 40. The flange 24 past the polygonal head is printed to include a taper, i.e., a tapered outer surface 23, with a minimum angle 25 of 25 degrees as measured from the print bed support surface 41 such that it can be printed without requiring supports, as for example shown in FIG. 3. This is accomplished by printing each successive layer forming the flange to extend slightly further radially outward than a previously formed adjacent layer onto which the successive layer is formed. If the flange was printed so that its lower surface cantilevered from the vertical body perpendicularly without having the tapered outer surface 23, the flange would be at the risk of sagging. To avoid sagging, supports are required to supporter the cantilevering flange. Printing without supports helps reduce waste and post processing on the fitting after it is removed from the print bed.

Moreover, when printing with additive technologies that build layers on top of layers, such as 3-D printing, a weakness is inherent between layers due to layer adhesion. As a result, applicants have discovered that when printed at 0 degrees, the fitting may not have the desired torsional, axial and horizontal strengths. For clarity, torsional strength is the rotational strength about the fitting central longitudinal axis. Axial strength is tensional strength along the fitting central longitudinal axis. Horizontal strength is the shear strength perpendicular to the fitting central longitudinal axis.

Applicants have discovered that they can increase the torsional, axial and horizontal strength of the fitting 10 by 3D printing its body it at an angle 12 i.e. by printing such that the central longitudinal axis 14 of the fitting body is at an angle 12 relative to a vertical axis 16, as for example shown in FIG. 4. This angle is referred to herein as the "print angle". When printing along a print angle, each layer of material is laid by the 3D printing process along a horizontal plane, but each successive layer is slightly offset so as to from the fitting with its central longitudinal axis extending along the print angle. The risk with printing at a print angle is that supports may be required to support the fitting formed and thus, create waste as well as require post processing. If supports are not used, the freshly printed layers created by 3D printing may sag. Applicants have discovered that they can print without sagging and thus, without supports at a print angle 12 in the range of 10 to 65 degrees. In an example embodiment the fitting body is 3D printed at a print angle in the range of 20 to 65 degrees. In another example embodiment, the fitting body is printed at a print angle in the range of 30 to 50 degrees. In a further example embodiment, the fitting body is 3D printed at a print angle of 45 print degrees. When printed at a 45 degree print angle for example, the polygonal head will be printed with a chamfered surface or chamfer 20 around the polygonal head at a chamfer angle 47 of 45 degrees (i.e., the angle between the chamfered surface 20 and the longitudinal axis 14 of the fitting. The chamfer surface is the surface that makes contact with the print bed, as for example shown in FIG. 4. Applicants believe that when printed at a 45 degree angle, the strength in the layers and between the layers is optimized such that axial loading, torsion loading, and horizontal loading these layer will not be in the same orientation as the loading applied to the fitting. In example embodiments where the fitting body is printed at a print angle between 10 to 65 degrees will have a chamfered surface 20 at chamfer angle 47 that is complementary to the print angle 12. For example, if the print angle is 30 degrees, the chamfer angle will be 60 degrees.

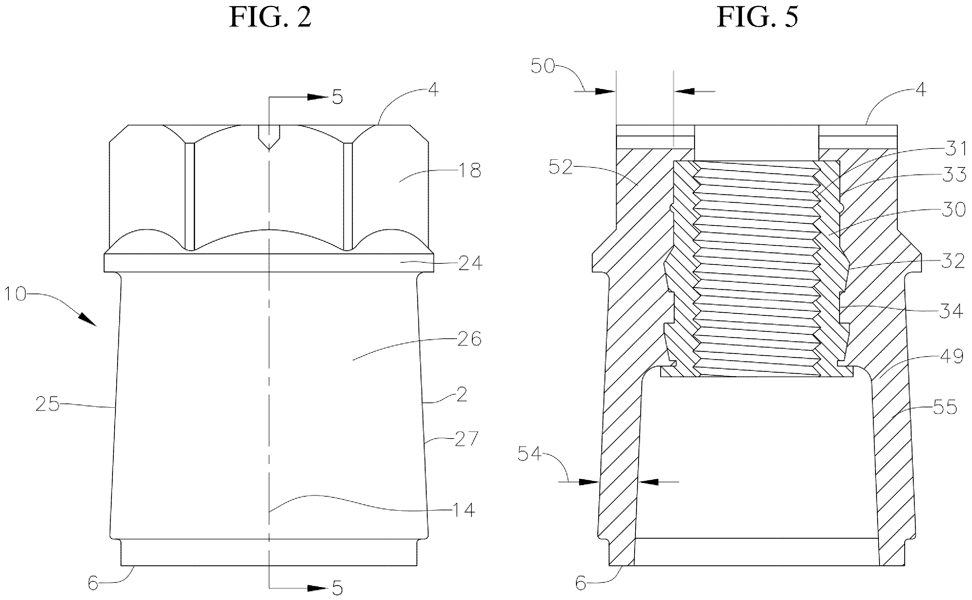

The fittings may have internal threads to allow for the threading of connecting members, such as clevis bolts or end rods for example. In an example embodiment, a separate female threaded insert 30 is used to define the requisite internal threads 31, as for example shown in FIG. 5. In one example embodiment, an internal passage 33 is formed in the fitting body to receive the threaded insert. In an example embodiment, the internal passage 33 has a diameter that provides for an interference fit with the outer surface diameter of the insert. In an example embodiment, the female threaded insert is heat staked in position. To do this, the fitting body is heated and the female threaded insert is pressed into the internal passage 33 of the heated fitting body. Once cooled, the threaded insert is fixed in place. The outer surface of the threaded insert may define peaks 32 and valleys 34 for axially interlocking with the fitting body. The threaded insert may be inserted from either end of the fitting body depending on which loading direction is the most critical for the final composite tube assembly. For example, if the tensile loading direction is most critical, the threaded insert should be inserted from the end opposite the hex end. In another example embodiment, the fitting body may 3D printed around the threaded insert. In yet another example embodiment, a portion of the fitting body is 3D printed having a passage for receiving the threaded insert. The threaded insert is placed in the passage and then the remaining fitting body is 3D printed over the threaded insert fully encapsulating the threaded insert within the fitting body. In an example embodiment, the threaded insert may have a polygonal outer surface, or may include ribs, or may be oval or have any other non-circular outer shape when viewed in cross-section perpendicular to its longitudinal axis, and the passage has a complementary shape for receiving the threaded insert. In this regard, when the threaded insert is installed into the passage it is retained from rotating about its longitudinal axis by the passage.

In an example embodiment, the fitting body is defined by an annular wall 49 having a first section 52 for receiving the female threaded insert 30 and a second section 55. The first section has a thickness 50 greater than a thickness 54 of the second section. In this regard the opening defined by the second sections is greater in diameter than the opening defined by the first section. This allows for more material at the area of interface with the female threaded insert and less material is the second section not interfacing with the female threaded insert resulting in weight savings.

The example embodiment fittings described herein have reduced weight, lead-time, and manufacturing waste when compared to our current machined fittings. In an example embodiment, a 3D printed fitting as described herein has an axial strength of at least 9000 lbf. In another example embodiment, a composite tube assembly incorporating any of the aforementioned example embodiment fittings has an axial strength of at least 300 lbf. In a further example embodiment, a composite tube assembly incorporating any of the aforementioned example embodiment fittings has an axial strength of at least 500 lbf.

While 3D printed fittings have been described herein in detail with particular references to example embodiments thereof, the example embodiments described herein are not intended to be exhaustive or to limit the scope of the invention to the exact forms disclosed. Persons skilled in the art and technology to which this invention pertains will appreciate that alterations and changes in the described structures and methods of assembly and operation can be practiced without meaningfully departing from the principles, spirit, and scope of this invention, as set forth in the following claims. Although relative terms such as "outer," "inner," "upper," "lower," "below," "above," and similar terms have been used herein to describe a spatial relationship of one element to another, it is understood that these terms are intended to encompass different orientations of the various elements and components of the invention in addition to the orientation depicted in the figures. Additionally, as used herein, the term "substantially," "about," and similar terms are used as terms of approximation and not as terms of degree, and are intended to account for the inherent deviations in measured or calculated values that would be recognized by those of ordinary skill in the art. Furthermore, as used herein, when a component is referred to as being "on" another component, it can be directly on the other component or components may also be present therebetween. Moreover, when a component is component is referred to as being "coupled" to another component, it can be directly attached to the other component or intervening components may be present therebetween.

The application can e.g. be summarized according to one or more of the following clauses:
1. A 3D printed fitting comprising:
   an axially extending body having a first end opposite a second end, wherein the body extends along a first axis, wherein the body is 3D printed by laying horizontal successive horizontal layers of material with the first axis at a print angle between 10 degrees and 65 degrees from a vertical axis.
2. The fitting as recited in clause 1, wherein the print angle is between 30 and 50 degrees.
3. The fitting as recited in clause 1 or clause 2, wherein the print angle is 45 degrees.
4. The fitting as recited in any of the preceding clauses, wherein the fitting further comprises a radially extending flange defined on the body between the first end and the second end.
5. The fitting as recited in clause 4, wherein the body comprises an outer surface that tapers in an axial direction away from the flange toward the second end from a smaller outer surface diameter to a larger outer surface diameter.
6. The fitting as recited in clause 5 further comprising a polygonal head extending from the first end toward the second end.
7. The fitting as recited in clause 6, wherein the polygonal head has a tapered end surface tapering at angle relative to the first axis, the angle being complementary to the print angle.
8. The fitting as recited in any of the preceding clauses, further comprising an internally threaded insert embedded in the body for threading a connecting insert thereto.
9. The fitting as recited in any of the preceding clauses, wherein the material is at least one of an onyx, plastic, or nylon reinforced with a continuous fiber.
10. The fitting as recited in clause 9, wherein the continuous fiber is a fiber selected from the group of fibers consisting essentially of carbon fiber, Kevlar, and fiberglass fibers.
11. A method of forming an axially extending fitting extending along a first axis from a first end of the fitting to a second end of the fitting, the method comprising 3D printing a body of the fitting by laying successive horizontal layers of material to form the fitting extending along a print angle defined between a vertical axis and the first axis.
12. The method as recited in clause 11, comprising 3D printing the body of the fitting to extend a print angle between 30 and 50 degrees.
13. The method as recited in clause 12, comprising 3D printing the body of the fitting to extend a print angle of 45 degrees.
14. The method as recited in any of the clauses 11-13, wherein 3D printing comprises printing the body of the fitting to have a polygonal end extending from the first end, wherein the polygonal end is 3D printed to have an end chamfered surface chamfered at an angle relative to the first axis that is complementary to the print angle.
15 The method as recited in any of the clauses 11-14, comprising 3D printing the body of the fitting to have a radially extending flange.
16. The method as recited in clause 15, comprising 3D printing the body of the fitting to have a section including a tapering outer surface tapering from a smaller to a larger diameter in a direction toward the second end.
17. The method as recited in any of the clauses 11-16, further comprising inserting an internally threaded insert into the body of the fitting from the first end or the second end.
18. The method as recited in any of the clauses 11-17, wherein 3D printing comprises:
   3D printing a portion of the body of the fitting ;
   inserting an internally threaded insert in the body of the fitting ; and
   3D printing a remaining portion of the body of the fitting encapsulating the insert within the body.
19. The method as recited in any of the clauses 11-18, wherein the material is at least one of an onyx, plastic, or nylon reinforced with a continuous fiber.
20. The method as recited in clause 19, wherein the continuous fiber is fiber selected from the group of fibers consisting essentially of carbon fiber, Kevlar, and fiberglass fibers.
21. A 3D printed fitting comprising:
   an axially extending body having a first end opposite a second end, wherein the body extends along a first axis, wherein the body is 3D printed with the first axis extending perpendicularly from a horizontal print bed.
22. The fitting as recited in clause 21, wherein the fitting further comprises a radially extending flange defined on the body between the first and the second end having a first surface opposite a second surface, wherein the first surface is closer to a print bed when being printed and wherein the first surface extends at an angle relative to first axis defining a tapering outer surface.
23. The fitting as recited in clause 22, formed by 3D printing without supports.
24. The fitting as recited in any of the clauses 21-23, wherein the body comprises an outer surface that tapers in an axial direction away from the flange toward the second end from a smaller outer surface diameter to a larger outer surface diameter.
25. The fitting as recited in any of the clauses 21-24-, further comprising a polygonal head extending from the first end toward the second end.
26. The fitting as recited in clause 25, wherein the polygonal head has a tapered end surface tapering at angle relative to the first axis.
27. The fitting as recited in any of the clauses 21-26, further comprising an internally threaded insert embedded in the body for threading a connecting insert thereto.
28. The fitting as recited in any of the clauses 21-27, wherein the body is formed by 3D printing with at least one of an onyx, plastic, or nylon reinforced with a continuous fiber.
29. The fitting as recited in clause 28, wherein the continuous fiber is fiber selected from the group of fibers consisting essentially of carbon fiber, Kevlar, and fiberglass fibers.

## Claims

1. A 3D printed fitting comprising:
an axially extending body having a first end opposite a second end, wherein the body extends along a first axis, wherein the body is 3D printed by laying horizontal successive horizontal layers of a material with the first axis at a print angle between 10 degrees and 65 degrees from a vertical axis.

2. The fitting as recited in claim 1, wherein the print angle is 45 degrees.

3. The fitting as recited in claim 1 or claim 2, wherein the fitting further comprises a radially extending flange defined on the body between the first end and the second end, wherein the body comprises an outer surface that tapers in an axial direction away from the flange toward the second end from a smaller outer surface diameter to a larger outer surface diameter.

4. The fitting as recited in any of the preceding claims, further comprising an internally threaded insert embedded in the body for threading a connecting insert thereto.

5. The fitting as recited in any of the preceding claims, wherein the material is at least one of an onyx, plastic, or nylon reinforced with a continuous fiber, wherein the continuous fiber is a fiber selected from the group of fibers consisting essentially of carbon fiber, Kevlar, and fiberglass fibers.

6. A method of forming an axially extending fitting extending along a first axis from a first end of the fitting to a second end of the fitting, the method comprising 3D printing a body of the fitting by laying successive horizontal layers of material to form the fitting extending along a print angle defined between a vertical axis and the first axis.

7. The method as recited in claim 6, comprising 3D printing the body of the fitting to extend along a print angle between 30 and 50 degrees.

8. The method as recited in claim 7, comprising 3D printing the body of the fitting to extend along a print angle of 45 degrees.

9. The method as recited in any of the preceding claims 6-8, wherein 3D printing comprises printing the body of the fitting to have a polygonal end extending from the first end, wherein the polygonal end is 3D printed to have an end chamfered surface chamfered at an angle relative to the first axis that is complementary to the print angle.

10. The method as recited in any of the preceding claims 6-9, wherein 3D printing comprises:
3D printing a portion of the body of the fitting ;
inserting an internally threaded insert in the body of the fitting ; and
3D printing a remaining portion of the body of the fitting encapsulating the insert within the body.

11. The method as recited in any of the preceding claims 6-10, wherein the material is at least one of an onyx, plastic, or nylon reinforced with a continuous fiber, wherein the continuous fiber is fiber selected from the group of fibers consisting essentially of carbon fiber, Kevlar, and fiberglass fibers.

12. A 3D printed fitting comprising:
an axially extending body having a first end opposite a second end, wherein the body extends along a first axis, wherein the body is 3D printed with the first axis extending perpendicularly from a horizontal print bed.

13. The fitting as recited in claim 12, wherein the fitting further comprises a radially extending flange defined on the body between the first and the second end having a first surface opposite a second surface, wherein the first surface is closer to a print bed when being printed and wherein the first surface extends at an angle relative to first axis defining a tapering outer surface.

14. The fitting as recited in claim 13, formed by 3D printing without supports.

15. The fitting as recited in in any of the preceding claims 12-14, further comprising an internally threaded insert embedded in the body for threading a connecting insert thereto.
